# EUROPÄISCHE PATENTANMELDUNG

(11) **EP 2 886 612 A1**
(43) Veröffentlichungstag der Anmeldung: **24.06.2015**
(21) Anmeldenummer: 13005849.8
(22) Anmeldetag: 17.12.2013
(51) Int. Cl.: C09C 1/36, C09C 3/06, C09C 3/04

(54) **Verfahren zur Oberflächenbeschichtung von anorganischen Partikeln, insbesondere Titandioxid-Partikeln**

(71) Anmelder: KRONOS INTERNATIONAL, INC., 51373 Leverkusen (DE)
(72) Erfinder: Friedrich, Jörg, 42799 Leichlingen (DE); Schmidt, Corinna, 50670 Köln (DE); Frahm, Heiko, 51375 Leverkusen (DE); Wilkenhöner, Uwe, 42107 Wuppertal (DE)

(57) **Zusammenfassung**

Die Erfindung betrifft ein Verfahren zur Oberflächenbeschichtung von anorganischen Festkörperpartikeln, insbesondere von Titandioxid-Pigmentpartikeln in einer wässrigen Suspension.

Die unbehandelten Partikel, insbesondere TiO₂-Grundkörper werden zu einer wässrigen Suspension angeteigt und anschließend deagglomeriert. Die deagglomerierte wässrige Partikelsuspension (2) wird erfindungsgemäß aus einem Vorlagegefäß (Gefäß) (1) in einem Kreislaufprozess (3) gefördert (umgepumpt). In dem Vorlagegefäß befindet sich ein Hochleistungsrührwerk (4). Das Hochleistungsrührwerk weist eine Mindest-Umfangsgeschwindigkeit von 15 m/s oder eine spezifische Rührleistung P/V von mindestens 30 W/m³ auf. In dem Kreislauf (3) ist weiterhin ein auf dem Rotor-Stator-Prinzip basierender Durchflussmischer (z.B. Inline-Dispergierer) (5) installiert. Die wasserlöslichen Vorläuferverbindungen der Beschichtungssubstanzen (6) ebenso wie die gegebenenfalls erforderlichen pH-steuernden Substanzen (7) werden in den Durchflussmischer dosiert. Das erfindungsgemäße Verfahren führt im Vergleich zu Verfahren des Stands der Technik bei Titandioxidpartikeln zu Oberflächenbeschichtungen höherer Glätte (niedrige spezifische Oberfläche nach BET) und verbesserter Dichte (niedrige Schwefelsäurelöslichkeit). Zudem wird weniger Beschichtungssubstanz separat ausgefällt (verbesserter Glanz).

## Beschreibung

### Gebiet der Erfindung

Die Erfindung betrifft ein Verfahren zur Oberflächen beschichtung von anorganischen Festkörperpartikeln in einer wässrigen Suspension. Insbesondere betrifft sie die Beschichtung von Titandioxid-Pigmentpartikeln mit Siliciumdioxid und Aluminiumoxid.

### Technologischer Hintergrund der Erfindung

Feinteilige anorganische Festkörperpartikel werden vielfach oberflächenbeschichtet, um bestimmte Eigenschaften zu verändern wie beispielsweise Abriebfestigkeit, Oberflächenladung, Dispergiereigenschaften, Säure- oder Lichtbeständigkeit. Beispielsweise beschreibt die US 2,886,366 das Aufbringen eines dichten Siliciumdioxid-Überzugs auf Substratteilcheh wie Nickel- oder Eisenpulver, Glasfasern oder Titandioxid. Farb- und Weißpigmente werden regelmäßig mit verschiedenen Oxiden und Hydroxiden beschichtet (z.B. EP 0 130 272 A1, US Re.27818).

Die-Oberflächenbehandlung (Nachbehandlung) insbesondere von TO₂-Pigmenten findet üblicherweise in der wässrigen Phase statt, wobei Metalloxide, -hydroxide, -phosphate oder ähnliche Verbindungen auf der Partikeloberfläche abgeschieden werden. Das Verfahren wird üblicherweise als Batchprozess in einem Rührbehälter geführt, wie beispielsweise in GB 1 340 045 offenbart. Ausgehend von einer wässrigen Pigmentpartikelsuspension werden entsprechende Metallsalze in gelöster Form als sogenannte Vorläuferverbindungen zugegeben. Der pH-Wert der Suspension wird dann mit alkalischen oder sauren Substanzen so eingestellt, dass die Vorläuferverbindungen als Oxide, Hydroxide etc. ausfallen. Beispielsweise offenbart die GB 1 340 045 ein Batchverfahren zur Oberflächenbeschichtung von Titandioxidpigment, wobei das Pigment in einer Suspension für bis zu zwei Stunden einer intensiven Rührung in einem Rührgefäß unterworfen wird, währenddessen die Beschichtungssubstanzert zugegeben und gefällt werden.
Bei der Zugabe der Vorläuferverbindungen kommt es jedoch aufgrund des vergleichsweise großen Volumens des Rührbehälters und der begrenzten Rührmöglichkeiten zu lokalen Konzentrations-, pH-, Viskasitäts- und Temperaturgradienten, welche das Ergebnis der Beschichtung von Titandioxidpartikeln beeinträchtigen. Die resultierende Beschichtung ist ungleichmäßig dicht bzw. ungleichmäßig dick.
Desweiteren kommt es leicht zu Partlkeiagglomeration in der Suspension, so dass die abgeschiedenen Beschichtungssubstanzen nicht das einzelne Partikel sondern häufig ein Agglomerat umhüllen. Die Agglomerate werden in der abschließenden Trockenmahlung wieder aufgebrochen, so dass im Endprodukt nicht alle Partikel mit einer geschlossenen Hülle versehen sind, sondern die Partikel auch unbeschichtete Oberflächenanteile aufweisen. Außerdem wird ein Teil der Beschichtungssubstanzen nicht auf der Partikeloberfläche fixiert, sondern bildet Flocken neben den Partikeln. Diese Flocken können aus der Suspension nicht mehr entfernt werden und wirken sich nachteilig auf die optischen Eigenschaften der Pigmente aus, beispielsweise auf Aufhellvermögen bzw. Färbekraft (tinting strength TS).
Ein Vortell des üblichen Batchprozesses in einem Rührbehälter ist die auf die Reaktionskinetik angepasste Verweilzeit. Ein Nachteil ist dagegen, dass Temperaturprofile während des Beschichtungsprozesses mit vernünftigem Aufwand nicht realisierbar sind.

Eine Verbesserung des bekannten Batchprozesses zur Beschichtung von Titandioxid in einem Rührbehälter ist die Verwendung einer Rührkesselkaskade. Hier werden die Vorläuferverbindungen der anorganischen Oxide jeweils in einem separaten kleineren Rührbehälter mit verbesserten Rührmöglichkeiten zugegeben.
Die US 6,696,906 B2 beschreibt ein solches Verfahren, bei dem TiO₂-Pigment mit SiO₂ und Al₂O₃ beschichtet wird. Die Zugabe der löslichen SiO₂-Komponente erfolgt in drei Schritten in drei aufeinanderfolgenden Behandlungsgefäßen, in denen jeweils ein anderer pH-Wert auftritt. Die Zugabe der SiO₂-Komponente erfolgt hierbei entweder direkt in das Behandlungsgefäß oder inline in die Förderleitung.
Doch auch hier treten lokale Konzentrations-, pH-, Viskositäts- und Temperaturgradienten auf, welche zu einer ungleichmäßig dichten bzw. ungleichmäßig dicken Beschichtung der Titandioxidpartikel führen. Auch der Nachteil, dass Temperaturprofile schwer zu realisieren sind, bleibt bestehen.

Eine zweite Verbesserung des bekannten Batchprozesses zur Beschichtung von Titandioxid in einem Rührbehälter ist ein vollkontinuierlicher Prozess in einem Rohrreaktor. Hier werden die Vorläuferverbindungen der anorganischen Oxide jeweils in einen Rohrreaktor mit idealen Rührmöglichkeiten (Inline-Mischer oder Inline-Dispergierapparat) gegeben. Die Zugabe der Vorläuferverbindungen erfolgt quasi auf molekularer Ebene, d.h. die zur Reaktion zu bringenden Vorläuferverbindungen und die zu beschichtenden Titandioxidpartikel werden auf engstem Raum zusammengebracht und ideal durchmischt. Dadurch werden lokale Konzentrations-, pH-, Viskositäts- und Temperaturgradienten vermieden,
Ein solches Verfahren ist z.B. in der US 5,993,533 offenbart, wo Titandioxidpigment In einem Inline-Mischer mit SiO₂ und Al₂O₃ beschichtet wird. Die Behandlung verlauft in zwei sich anschließenden Reifestufen bei 80 bis 100 °C und bei pH-Werten von >9,5 bzw. <8,5.
Die US 2009/0297852 A1 beschreibt ebenfalls einen kontinuierlichen Prozess zur Beschichtung von anorganischen Partikeln, wobei die Vorläuferverbindungen direkt vor einem oder in einem Inline-Dispergierapparat zugegeben und homogenisiert werden.
Der vollkontnuierliche Prozess erlaubt die Realisierung von Temperaturprofilen. Von Nachteil ist allerdings, dass eine auf die Reaktionskinetik angepasste Verweilzeit nur entweder durch ein gegebenenfalls sehr langes Rohr unter Vermeidung der Ausbildung eines laminaren Strömungsprofils oder durch einen entsprechend großen Verweilzeitbehälter realisiert werden kann. Ein weiterer Nachteil des vollkontinuierlichen Prozesses ist, dass bei nicht idealer Prozessführung eine Durchmischung der einzelnen anorganischen Oxide mit den nachfolgend aufgebrachten Beschichtungsmaterialien nicht ausgeschlossen werden kann und deswegen Mischoxidschichten anstelle von separaten Oxidschichten entstehen.

### Aufgabenstellung und Kurzbeschreibung der Erfindung

Der Erfindung liegt die Aufgabe zugrunde, ein Verfahren zur Beschichtung von anorganischen Partikeln bereitzustellen, welches die Nachteile der bekannten Verfahren überwindet, beispielsweise, dass sowohl die Homogenisierung der Suspension sichergestellt ist, als auch eine Agglomeratbildung weitgehend unterbunden wird.

Die Aufgabe wird gelöst durch ein Verfahren zur Beschichtung von anorganischen Partikeln in einer wässrigen Suspension mit mindestens einer Beschichtungssubstanz dadurch gekennzeichnet, dass die wässrige Suspension im Kreislauf gefördert wird und in dem Kreislauf ein Gefäß vorhanden ist, wobei das Gefäß mit einem Hochleistungsrührwerk, das eine Umfangsgeschwindigkeit von mindestens 15 m/s oder eine spezifische Rührwerksleistung P/V von mindestens 30 W/m³ aufweist, ausgerüstet ist und wobei in dem Kreislauf weiterhin ein auf dem Rotor-Stator-Prinzip basierender Durchflussmischer installiert ist und wobei In den Durchflussmischer eine wasserlösliche Vorläuferverbindung der mindestens einen Beschichtungssubstanz dosiert wird.

Weitere vorteilhafte Ausführungen der Erfindung sind in den Unteransprüchen beschrieben.

### Figuren

Figur 1: Flussdiagramm des erfindungsgemäßen Verfahrens
Figur 2: Transmissionselektronenmikroskopaufnahme des Pigments gemäß Beispiel 1
Figur 3: Transmissionsefektronenmikroskopaufnahme des Pigments gemäß Beispiel 3
Figur 4: Transmissionselektronenmikroskopaufnahme des Pigments gemäß Vergleichsbeispiel 3

### Beschreibung der Erfindung

Das erfindungsgemäße Verfahren geht aus von einer wässrigen Suspension unbehandelter anorganischer Festkörperpartikel, die im Folgenden auch als Grundkörper bezeichnet werden. Geeignet sind feinteilige anorganische Festkörper mit einer Partikelgröße im Bereich von etwa 0,001 µm bis 1 mm bevorzugt 0,1 bis 1 µm, die in wässrigen Suspensionen verarbeitet werden, wie z.B. Pigmente (Titandioxid, Farbpigmente, Effektpigmente etc.), Füllstoffe, Titanate, Eisen-, Nickel- oder andere metallische Partikel.
Als Beschichtung kommen Oxide, Hydroxide, Phosphate und ähnliche Verbindungen der bekannten Elemente Si, Ti, Al, Zr, Sn, Mn, Ce und weiterer Elemente in Frage. Hier und im Folgenden soll unter "Oxid" auch das jeweilige Hydroxid oder wasserhaltige Oxid verstanden werden, Insbesondere handelt es sich um anorganische Beschichtungen

in einer besonderen Ausführung der Erfindung kommen unbehandelte Titandioxidpigmentpartikel (TiO₂-Grundkörper) zum Einsatz. Es kann sowohl nach dem Sulfatverfahren wie nach dem Chloridverfahren hergestellter TiO₂-Grundkörper eingesetzt werden. Der TiO₂-Grundkörper kann Anatas- oder Rutilstruktur haben. Bevorzugt ist Rutil. Üblicherweise ist der TiO₂-Grundkörper zur Verbesserung der Photostabilität des TiO₂-Pigments mit bekannten Elementen wie z.B. Al dotiert. Beispielsweise wird im Chloridverfahren eine solche Menge AlCl₃ zusammen mit TiCl₄ oxidiert, dass der TiO₂-Grundkörper etwa 0,5 bis 2,0 Gew.-% Al gerechnet als Al₂O₃ aufweist. Bei der Titandioxidherstellung nach dem Sulfatverfahren wird das hydrolysierte Titanylsulfat mit Glühzusätzen wie beispielsweise Kaliumhydroxid oder Phosphorsäure versetzt und anschließend calciniert. Der TiO₂-Grundkörper aus dem Sulfatverfahren enthält üblicherweise etwa 0,2 bis 0,3 Gew.-% K sowie 0,05 bis 0,4 Gew.-% P gerechnet jeweils als Oxid.

Die unbehandelten Partikel, insbesondere TiO₂-Grundkörper werden zu einer wässrigen Suspension angeteigt. Üblicherweise wird der Suspension ein Dispergiermittel zugesetzt. Geeignete Dispergiermittel sind dem Fachmann bekannt. Beispielsweise wird bei der Deagglomeration von TiO₂-Grundkörper in Sandmühlen bevorzugt Natriumsilikat oder Natriumhexametaphosphat als Dispergiermittel eingesetzt. Die Konzentration des Dispergiermittels liegt üblicherweise im Bereich von 0,05 bis 5,0 kg/t TiO₂.

Üblicherweise wird auch der pH-Wert der Suspension in Abhängigkeit von Partikelart und Dispergiermittel eingestellt. Beispielsweise wird bei der Deagglomeration von TiO₂-Grundkörper aus dem Ghloridverfahren der pH-Wert auf Werte von etwa 9 bis 12 oder auf Werte von etwa 2 bis 5 eingestellt. Die Temperatur von TiO₂-Grundkörpersuspensionen liegt üblicherweise bei etwa 40 bis 80°C.

Üblicherweise wird die Suspension anschließend deagglomeriert, beispielsweise in Rührwerksmühlen wie Perlmühlen oder Sandmühlen oder in Ultraschallmühlen.

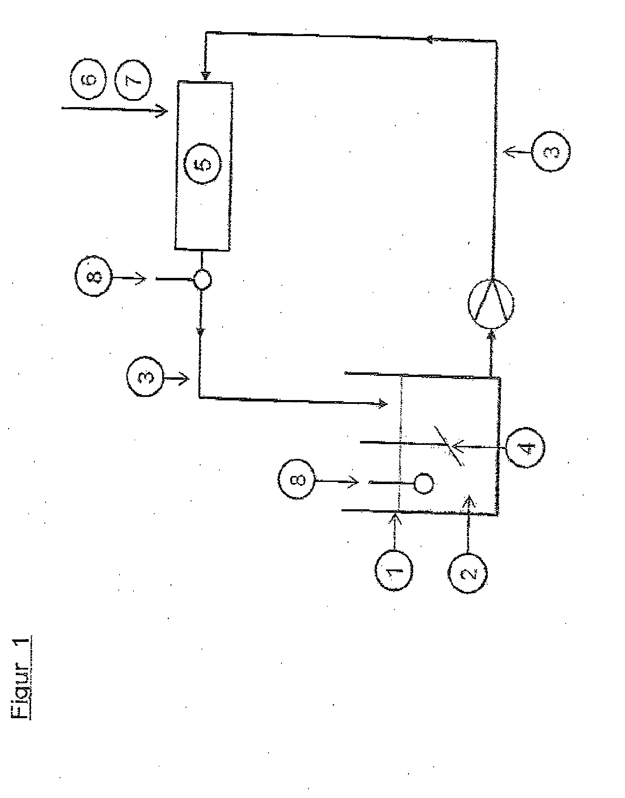

Das erfindungsgemäße Verfahren zur Oberflächenbeschichtung (Nachbehandlung) von anorganischen Partikeln ist schematisch in Figur 1 dargestellt.
Die deagglomerierte wässrige Partikelsuspension (2) wird erfindungsgemäß aus einem Vorlagegefäß (Gefäß) (1) in einem Kreislaufprozess (3) gefördert (umgepumpt). In dem Vorlagegefäß befindet sich ein Hochleistungsrührwerk (4). Das Hochleistungsrührwerk weist eine Mindest-Umfangsgeschwindigkeit von 15 m/s oder eine spezifische Rührleistung P/V von mindestens 30 W/m³ auf, wobei P=Rührwerksleistung und V=Volumen des Gefäßes sind. Das Hochleistungsrührwerk basiert beispielsweise auf dem Rotor-Stator-Prinzip und ist vorzugsweise ein Leitstrahlmischer. Ein Leitstrahlmischer ermöglicht ein intensives Mischen im Makro- und im Mikromaßstab. Desweiteren sind Zahnradscheibenrührer oder Hochleistungsschrägblatrührer geeignet.
In dem Kreislauf (3) ist weiterhin ein Durchflussmischer (z.B. Inline-Dispergiermischer) (5) installiert, der ebenfalls auf dem Rotor-Stator-Prinzip beruht, Die wasserlöslichen Vorläuferverbindungen der Beschichtungssubstanzen (6) ebenso wie die gegebenenfalls erforderlichen pH-steuernden Substanzen (7) werden in den Durchflussmischer (5) dosiert. Auf diese Weise werden lokale Konzentrations-, pH-, Viskositäts- und Temperaturgradienten in der Suspension minimiert. Desweiteren sind pH-Sonden (8) in den Kreislauf (3) und das Gefäß (1) integriert.

Zur Beschichtung der Partikel mit Siliciumdioxid wird als wasserlösliche Vorläuferverbindung üblicherweise Natronwasserglas oder Kaliumwasserglas eingesetzt. Des Weiteren können erfindungsgemäß auch metallorganische Verbindungen wie beispielsweise Alkoxysilane als Vorläuferverbindungen für die Beschichtung mit SiO₂ eingesetzt werden. Siliciumdioxid kann als poröse Beschichtung oder als dichte Hülle auf die Partikeloberfläche gefällt werden. Erfindungsgemäß können die Partikel mit den üblicherweise eingesetzten Mengen an Siliciumdioxid beschichtet werden, beispielsweise mit etwa 1 bis 20 Gew.-% SiO₂ bei TiO₂-Pigmentpartkeln.

Zur Beschichtung mit Aluminiumoxid werden als Vorläuferverbindung üblicherweise wasserlösliche Aluminiumsalze wie Natriumaluminat, Aluminiumsulfat, Aluminiumchlorid etc. eingesetzt. Dem Fachmann sind solche Verbindungen bekannt, insbesondere aus der umfangreichen Patentliteratur zur Oberflächenbeschichtung (Nachbehandlung) von Titandioxid.
Erfindungsgemäß können die Partikel mit den üblicherweise eingesetzten Mengen an Aluminiumoxid beschichtet werden, beispielsweise mit etwa 0,5 bis 10 Gew.-% Al₂O₃ bei TiO₂-Pigmentpartikeln.

Nachdem die Suspension den Durchflussmischer (z.B. Inline-Disporgierer) passiert hat, wird sie durch das Vorlagegefäß und weiter im Kreis gefördert. Die im Vorlagegefäß durch den Leitstrahlmischer eingebrachten erhöhten Scherkräfte sorgen mit der besseren Durchmischung ebenfalls für eine Minimierung der lokalen Konzentrations-, pH-, Viskositäts- und Temperaturgradienten in der Suspension.

Erfindungsgemäß sind verschiedene Fellungsbedingungen der Beschichtungssubstanz realisierbar. Beispielsweise kann eine kinetisch gesteuerte Fällung von Siliciumdioxid aus Natronwasserglas zur Ausbildung einer dichten Hülle realisiert werden. Hierzu werden die pH-steuernden Substanzen in den Durchflussmischer (z.B. Inline-Dispergierer) dosiert, und die SiO₂-Fällung findet während des kontinuierlichen Scherenergieeintrags im Kreislaufverfahren zeitlich versetzt statt. Eine Agglomeration der TiO₂-Partikel während der zur Fällung erforderlichen pH-Wert-Änderung wird durch den hohen kontinuierlichen Scherenergieeintrag minimiert.
Die Fällung von beispielsweise Al₂O₃ bei einem festen pH-Wert findet dagegen direkt nach Zugabe der pH-steuernden Substanzen und der Durchmischung im Durchflussmischer (z.B. Inline-Dispergierer) statt.

Mit dem erfindungsgemäßen Verfahren ist es darüber hinaus möglich, den Beschichtungsprozess mit einem Temperaturprofil zu führen. Bei dieser Verfahrensweise verfügt beispielsweise das Vorlagegefäß über einen Doppelmantel, über den das Gefäß mit Dampf geheizt oder mit Kühlwasser bzw. über einen Wärmetauscher gekühlt werden kann. Gegebenenfalls kann auch die Temperatur der Förderleitung mit einem Wärmetauscher geregelt werden.

In einer besonderen Ausführung der Erfindung wird die dichte SiO₂-Hülle bei einer Temperatur von etwa 85 bis 95°C bevorzugt bei etwa 90°C und die nachfolgende Al₂O₃-Schicht bei einer Temperatur von etwa 45 bis 55°C bevorzugt bei etwa 50°C auf die Partikel gefällt.

Im Anschluss an die Fällung wird die Suspension auf einen pH-Wert von etwa 5 bis 7 eingestellt, abgepumpt und die beschichteten Partikel nach bekannten Verfahren aus der Suspension abgetrennt, gegebenenfalls gewaschen, getrocknet und feingemahlen. Die Partikel weisen am Ende des Verfahrens vorzugsweise einen pH-Wert von weniger als 6,5 auf.

Gegenüber den bekannten Verfahren aus dem Stand der Technik bietet das erfindungsgemäße Verfahren folgende Vorteile:
Aufgrund der erhöhten. Scherenergieeinträge, die sich durch das Hochleistungsrührwerk im Vorlagegefäß und den Durchflussmischer auf Rotor-Stator-Basis (z.B. Inline-Dispergierer) im Kreislaufsystem realisieren lassen, ist eine verbesserte Homogenisierung der Suspension möglich. Weiterhin lassen sich hohe Viskositäten, die unter anderen Umständen zur Verdickung der Suspension und entsprechenden Verarbeitungsschwierigkeiten führen, minimieren. Der hohe Scherenergieeintrag kann darüber hinaus zu einer Vereinzelung von Partikelagglomeraten führen, die sich im Verlaufe des Nachbehandlungsprozesses auch aufgrund des pH-Verlaufs bilden.
Mit Hilfe der erfindungsgemäßen Kreislauffahrweise lassen sich Temperaturprofile während der Nachbehandlung realisieren, indem beispielsweise die Temperatur in überschaubarer Zeit während der Nachbehandlung abgesenkt wird. Eine feststehende Temperatur während des gesamten Prozesses ist nicht zwingend notwendig.
Weiterhin können zwei verschiedene Fällungszonen realisiert werden. Während eine kinetisch gesteuerte Fällung zeitlich versetzt nach der Dosierung und Mischung stattfindet, kann eine Fällung bei konstantem pH-Wert unmittelbar nach der Dosierung im Dispergierkopf des Durchflussmischers (z.B. Inline-Dispergierer) stattfinden.
Das erfindungsgemäße Verfahren ermöglicht den Aufbau separater, nacheinander gefällter Schichten auf der Partikeloberfläche.
Darüber hinaus kann durch die Verwendung zweier parallel installierter Vorlagegefäße eine Peridelfahrweise realisiert werden, wodurch die Bildung separater Schichten verbessert wird.

### Beispiels

Nachfolgend wird die Erfindung anhand von Beispielen näher erläutert, ohne dass diese als Einschränkung der Erfindung zu verstehen sind. Die Mengenangaben beziehen sich jeweils auf den TiO₂-Grundkörper.

### Beispiel 1

Es wurden 224 L einer Suspension von Titandioxid-Grundkörper aus dem Chloridverfahren mit einem Feststoffgehalt von 450 g/L in einem Vorlagegefäß (1) mit Hochleistungsrührwerk (4) bereitgestellt. Die Suspension wurde mit 500 L/h 40 min im Kreislauf (3) durch den Inline-Dispergierer (5) und das Gefäß (1) gepumpt. Während des Kreislaufprozesses wurde die Suspension auf 90°C erhitzt und durch Zugabe von NaOH (7) der pH-Wert auf 10 eingestellt. Anschließend wurde 2,0 Gew.-% SiO₂ in Form von Natriumwasserglaslösung (entsprechend 17,7 L mit einer Wirkstoffkonzentration von 115 g/L) innerhalb von 20 min dosiert (6). Arischließend wurde 20 min weiter umgepumpt, wobei sich die SiO₂-Hülle auf der Partikeloberfläche bildete.
Zur Absenkung des pH-Werts wurde anschließend 0,2 Gew.-% TiO₂ in Form von Titanylchloridlösung (entsprechend 1,5 Liter mit einer Wirkstoffkonzentration von 140 g/l) und anschließend 30 %ige HCl so dosiert (7), dass nach 100 min ein pH-Wert von 7,5 und nach 120 min ein pH-Wert von 4 erreicht war.
Anschließend wurde die Suspension innerhalb von ca. 20 min auf 50°C abgekühlt. Anschließend wurde 3,0 Gew.-% Al₂O₃ in Form von Natriumaluminatlösung (entsprechend 10,4 L mit einer Wirkstoffkonzentration von 293 g/L) (6) bei gleichzeitiger Zugabe von 30 %iger HCl (7) innerhalb von 30 min so dosiert, dass der pH-Wert konstant bei etwa 4 blieb. Abschließend wurde der pH-Wert durch Zugabe von 0,2 Gew.-% Al₂O₃ in Form von Natriumaluminatlösung sowie von NaOH auf einen Wert im Bereich 5 bis 8 eingestellt.
Die Suspension wurde abgepumpt, filtriert, gewaschen, getrocknet und in einer Dampfstrahlmühle gemahlen.

### Vergleichsbeispiel 1a

Wie Beispiel 1, jedoch mit dem Unterschied, dass nicht im Kreislauf gepumpt wurde und dass die wasserlöslichen Vorläuferverbindungen direkt in das Vorlagegefäß (1) gegeben wurden.

### Vergleichsbeispiel 1b

Wie Vergleichsbeispiel 1a, jedoch mit dem Unterschied, dass im Vorlagegefäß (1) anstelle des Leitstrahlmischers ein Propellerrührer installiert war.

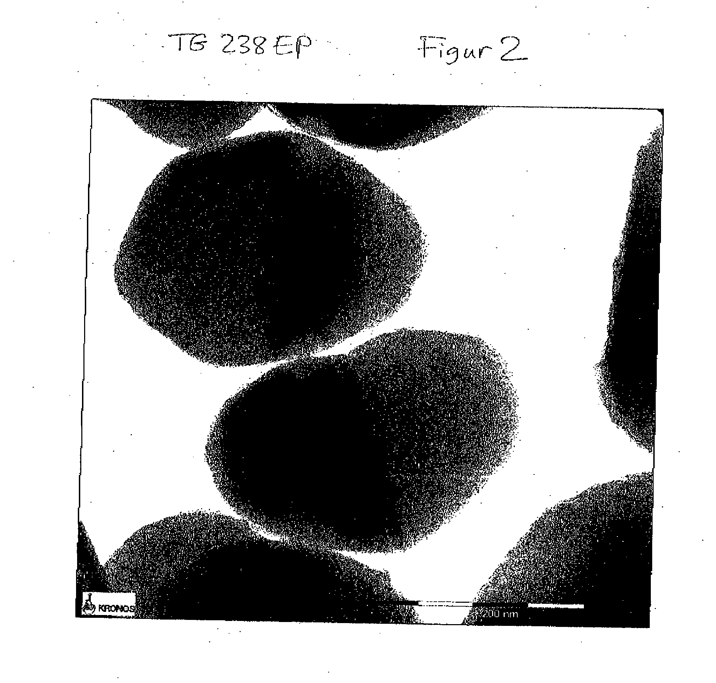

Die erzeugten TiO₂-Pigmente wurden unter dem Transmissionselektronenmikroskop untersucht (Fig. 2) und die spezifische Oberfläche (BET), Schwefelsäurelöslichkeit und Glanz (HMG) wurden getestet (Tab. 1).

**Tabelle 1**

| | BET | Schwefelsäurelöslichkeit | Glanz (HMG) |
|---|---|---|---|
| Beispiel 1 | 9,0 m²/g | 10,0 Gew.-% | 76 |
| Vergleichsbeispiel 1a | 9,5 m²/g | 16,2 Gew.-% | 74 |
| Vergleichsbeispiel 1b | 10,0 m²/g | 16,0 Gew.-% | 72 |

### Beispiel 2

Wie Beispiel 1, jedoch mit dem Unterschied dass 2,8 Gew.-% SiO₂ anstelle von 2,0 Gew.-% und 2,3 Gew.-% Al₂O₃ anstelle von 3,0 Gew.-% in Form der entsprechenden Vorläuferverbindung dosiert wurden.

### Vergleichsbeispiel 2

Wie Beispiel 2 jedoch mit den Unterschied, dass nicht im Kreislauf gepumpt wurde und dass die wasserlöslichen Vorläuferverbindungen direkt in das Vorlagegefäß (1) gegeben wurden und dass im Vorlagegefäß (1) anstelle des Leitstrahlmischers ein Propellerrührer installiert war.

Die erzeugten TiO₂-Pigmente wurden unter dem Transmissionselektronenmikroskop untersucht und die spezifische Oberfläche (BET) und Schwefelsäurelöslichkeit wurden getestet (Tab. 2).

**Tabelle 2**

| | BET | Schwefelsaurelöslichkeit |
|---|---|---|
| Beispiel 2 | 9,4 m²/g | 5,9 Gew.-% |
| Vergleichsbeispiel 2 | 11,1 m²/g | 8,2 Gew.-% |

### Beispiel 3

Wie Beispiel 2, jedoch mit dem Unterschied, dass der Prozess bei einer einheitlichen Temperatur von 80°C durchgeführt wurde.

### Vergleichsbeispiel 3

Wie Beispiel 3, jedoch mit dem Unterschied, dass nicht im Kreislauf gepumpt wurde und dass die wasserlöslichen Vorläuferverbindungen direkt in das Vorlagegefäß (1) gegeben wurden und dass im Vorlagegefäß (1) anstelle des Leitstrahlmischers ein Propellerrührer installiert war.

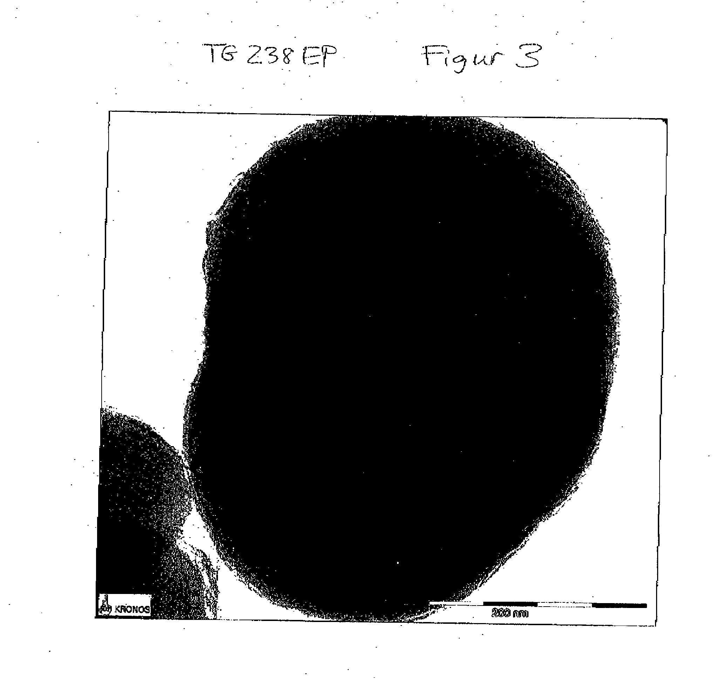

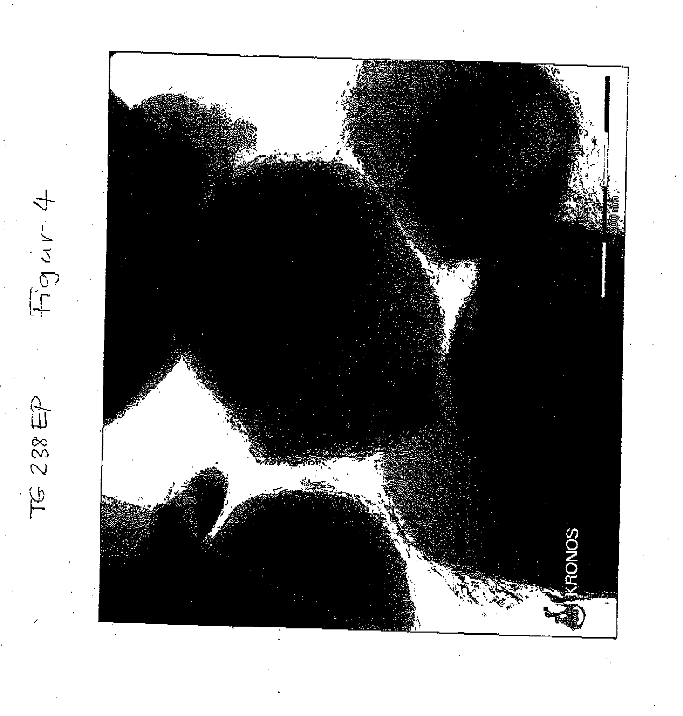

Die erzeugten TiO₂-Pigmente wurden unter dem Transmissionselektronenmikroskop untersucht (Beisp. 3 = Fig. 3, Vergleichsbeisp. 3 = Fig. 4) und die spezifische Oberfläche (BET) und Schwefelsäurelöslichkeit wurden getestet (Tab. 3).

**Tabelle 3**

| | BET | Schwefelsäurelöslichkeit |
|---|---|---|
| Beispiel 3 | 12,2 m²/g | 8,2 Gew.-% |
| Vergleichsbeispiel 3 | 15,1 m²/g | 12,6 Gew.-% |

### Testmethoden

### Spezifische Oberfläche nach BET (Brunauer-Emmett-Teller):

Die BET-Oberfläche wird mit einem Tristar 3000 der Fa. Micromeritics nach dem statisch volumetrischen Prinzip gemessen.

### Schwefelsäurelöslichkeit:

Eine Suspension aus 500 mg Pigment in 25 ml konzentrierter Schwefelsäure (96 Gew.-%) wird 60 min bei 175°C gehalten. Nach Filtration wird im Filtrat das gelöste TiO₂ mittels, ICP-Atomemissionsspekirometrie bestimmt. Je geringer die Konzentration des gelösten TiO₂, desto dichter ist die SiO₂-Hülle auf der Pigmentoberfläche.

### Glanz (HMG):

Das Pigment wird mit einer Farbenausreibmaschine (Muller) in Alkydal F26 X 60% von Bayer dispergiert. Eine Probe der Suspension mit einer PVK von 27% wird mit einem Filmzieher auf eine Glasplatte aufgezogen. Nach dem Trocknen des Filmaufstrichs wird der Glanz (20°) mit einem Haze-Gloss Raflektomater gemessen.

Mit Hilfe der Transmissionselektronenmikroskopie (TEM) kann die Beschichtung der Titandioxid-Partikel sichtbar gemacht werden.

### Fazit

Das erfindungsgemäße Verfahren führt im Vergleich zu Verfahren des Stands der Technik zu Oberflächenbeschichtungen höherer Glätte (niedrige spezifische Oberfläche nach BET) und verbesserter Dichte (niedrige Schwefelsaurelöslichkeit). Zudem wird weniger Beschichtungssubstanz separat ausgefällt (verbesserter Glanz).

## Patentansprüche

1. Verfahren zur Beschichtung von anorganischen Partikeln in einer wässrigen Suspension mit mindestens einer Beschichtungssubstanz: **dadurch gekennzeichnet, dass**
die wässrige Suspension von anorganischen Partikeln im Kreislauf gefördert wird und
wobei in dem Kreislauf ein Gefäß vorhanden ist,
wobei das Gefäß mit einem Hochleistungsrührwerk, das eine Umfangsgeschwindigkeit von mindestens 15 m/s oder eine spezifische Rührleistung von mindestens 30 W/m³ aufweist, ausgerüstet ist und
wobei in dem Kreislauf weiterhin ein auf dem Rotor-Stator-Prinzip beruhender Durchflussmischer installiert ist und
wobei in den Durchflussmischer eine wasserlösliche Vorläuferverbindung der mindestens eine Beschichtungssubstanz dosiert wird.

2. Verfahren nach Anspruch 1 **dadurch gekennzeichnet, dass** die anorganischen partikel Titandioxidpartikel sind.

3. Verfahren nach Anspruch 1 oder 2 **dadurch gekennzeichnet, dass** die Partikel mit Siliciumdioxid und/oder Aluminiumoxid beschichtet werden.

4. Verfahren nach einem oder mehreren der Ansprüche 1 bis 3 **dadurch gekennzeichnet, dass**
das Gefäß entweder geheizt oder gekühlt werden kann.

5. Verfahren nach einem oder mehreren der Ansprüche 1 bis 4 **dadurch gekennzeichnet, dass**
die Beschichtung mit Siliciumdioxid bei einer Temperatur von 85 bis 95°C stattfindet.

6. Verfahren nach einem oder mehreren der Ansprüche 1 bis 4 **dadurch gekennzeichnet, dass**
die Beschichtung mit Aluminiumoxid bei einer Temperatur von 45 bis 55°C stattfindet.

7. Verfahren nach Anspruch 3 **dadurch gekennzeichnet, dass** die Siliciumdioxid-Beschichtung als dichte Hülle ausgebildet ist.

8. Verfahren nach einem oder mehreren der Ansprüche 1 bis 7, **dadurch gekennzeichnet, dass**
gegebenenfalls erforderliche pH-steuernde Substanzen über den Durchflussmischer in die Suspension dosiert werden.

9. Verfahren nach Anspruch 8 **dadurch gekennzeichnet, dass** als pH-steuernde Substanz Titanylchlorid eingesetzt wird.

10. Verfahren nach einem oder mehreren der Ansprüche 1 bis 9 **dadurch gekennzeichnet, dass**
die beschichteten anorganischen Partikel am Ende des Verfahrens einen pH-Wert von weniger als 6,5 aufweisen.
